# FASCICULE DE BREVET EUROPEEN

(11) **EP 1 658 799 B1**
(45) Date de publication et mention de la délivrance du brevet: **01.08.2007**
(21) Numéro de dépôt: 05356193.2
(22) Date de dépôt: 04.11.2005
(51) Int. Cl.: A47J 43/25

(54) **Appareil pour raper les aliments**
Reibe
Food grating apparatus

(30) Priorité: 18.11.2004 FR 0412247
(43) Date de publication de la demande: 24.05.2006
(73) Titulaire: SEB S.A., 69130 Ecully (FR)
(72) Inventeur: Barrier, Noel, 53470 Chalons du Maine (FR)
(74) Mandataire: Kiehl, Hubert

(56) Documents cités:
- US-A- 1 793 934

## Description

La présente invention se rapporte à un appareil pour râper les aliments comportant un tambour rotatif entraîné en rotation par une manivelle dont l'extrémité peut s'accoupler de manière amovible avec le tambour rotatif et se rapporte plus particulièrement à un appareil à râper dans lequel le tambour est disposé dans un berceau semi-cylindrique ménagé sur une pièce support, une pièce de fermeture montée pivotante sur la pièce support pouvant occuper soit une position de travail dans laquelle elle recouvre et emprisonne le tambour dans le berceau, soit une position basculée pour laquelle le tambour est dégagé.

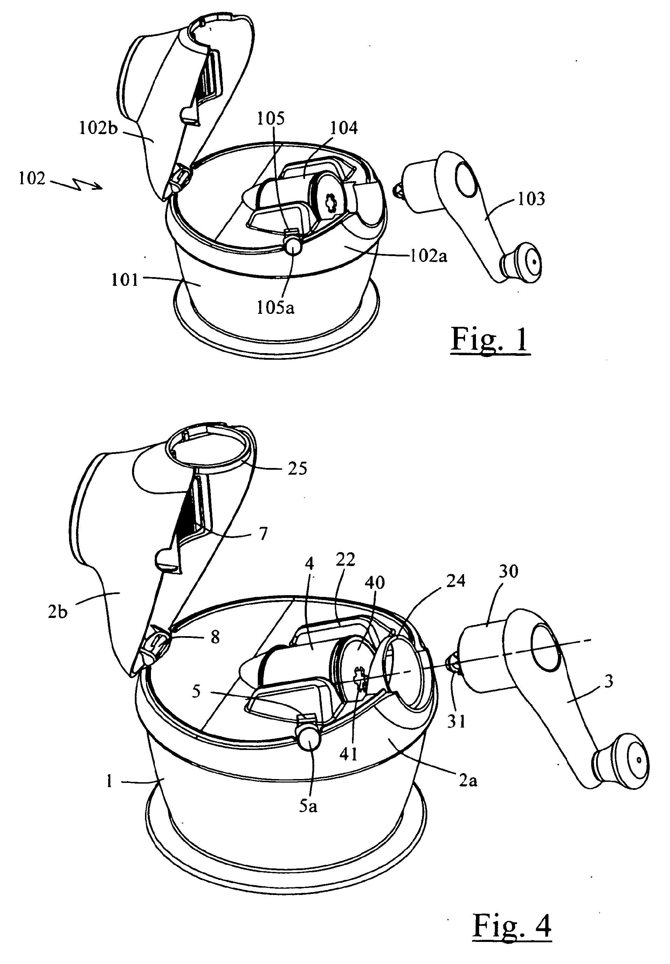

Il est connu de l'art antérieur un appareil "multi-râpe", commercialisé en France sous la marque Moulinex et semblable à celui représenté sur la figure 1, comportant un récipient 101 fermé par un couvercle 102 comportant une manivelle amovible 103 actionnant un tambour râpeur rotatif 104 intégré dans le couvercle. Le couvercle 102 de cet appareil comprend deux parties: une partie inférieure 102a comprenant un berceau semi-cylindrique recevant le tambour rotatif 104 et une partie supérieure 102b, montée pivotante sur la partie inférieure 102a, pouvant occuper une position de travail dans laquelle elle recouvre et emprisonne le tambour 104 dans le berceau. Afin de solidariser les deux parties 102a, 102b du couvercle 102 lors de l'utilisation de l'appareil, il est prévu un verrou 105 associé à un bouton de déverrouillage 105a disposé latéralement à la manivelle 103, à la jonction entre les deux parties 102a, 102b. Ce verrou 105 est porté par la partie inférieure 102a du couvercle 102 et est constitué par un loquet qui vient s'engager élastiquement sur une rainure formée à l'intérieur de la partie supérieure 102b du couvercle 102.

Un tel verrou assure un maintien satisfaisant de la partie supérieure 102b du couvercle 102 lors de l'opération de râpage des aliments lorsque le couvercle de l'appareil possède un diamètre réduit. Cependant, la demanderesse s'est rendu compte que pour un appareil muni d'un récipient de plus grand diamètre, afin de contenir une plus grande quantité d'aliments râpés, la tenue de la partie supérieure du couvercle au moyen du seul verrou latéral devient insuffisante.

En effet, les efforts de râpage au niveau du tambour engendrent des efforts de flexion plus importants sur le couvercle de sorte que ce dernier a tendance à se soulever du côté où il n'est pas tenu par le verrou, ce qui ne permet pas un fonctionnement correct de l'appareil.

Aussi, un but de la présente invention est de remédier à ces inconvénients en proposant une solution à la fois simple et économique à réaliser qui permette d'obtenir un appareil à râper dans lequel la tenue de la pièce de fermeture venant recouvrir et emprisonner le tambour lors du fonctionnement de l'appareil est notablement améliorée. Un autre but de l'invention est de proposer une solution de maintien de la pièce de fermeture qui n'impose pas une manipulation supplémentaire et contraignante pour l'utilisateur, de manière à conserver une excellente ergonomie d'utilisation.

A cet effet, l'invention a pour objet un appareil pour râper les aliments comportant un tambour rotatif entraîné en rotation par une manivelle comprenant un arbre rotatif dont l'extrémité peut s'accoupler de manière amovible avec ledit tambour rotatif, le tambour étant disposé dans un berceau semi-cylindrique ménagé sur une pièce support, une pièce de fermeture montée pivotante sur la pièce support pouvant occuper soit une position de travail dans laquelle elle recouvre et emprisonne le tambour dans le berceau, soit une position basculée dans laquelle le tambour est dégagé, caractérisé en ce que la pièce support et la pièce de fermeture comportent chacune au moins un élément de maintien au travers duquel s'engage axialement l'arbre rotatif de la manivelle lorsque la manivelle est accouplée au tambour.

Ainsi, les éléments de maintien rendent la pièce support et la pièce de fermeture radialement solidaire de l'arbre rotatif lorsque la manivelle est accouplée au tambour de sorte que la pièce de fermeture est immobilisée en position de travail sur la pièce support.

Une telle caractéristique présente l'avantage de rendre la pièce de fermeture solidaire de la pièce support, par la simple mise en place de la poignée amovible, sans nécessiter de manipulation supplémentaire de la part de l'utilisateur. De plus, une telle caractéristique présente également l'avantage de maintenir la pièce de fermeture au niveau de la poignée, c'est-à-dire à l'endroit où les efforts de soulèvement du couvercle sont les plus importants lors de l'utilisation de l'appareil.

Selon une autre caractéristique de l'invention, lorsque la manivelle est accouplée au tambour, l'élément de maintien porté par la pièce support s'étend, au moins partiellement, autour de la moitié supérieure de l'arbre rotatif de la manivelle tandis que l'élément de maintien porté par la pièce de fermeture s'étend, au moins partiellement, autour de la moitié inférieure de l'arbre rotatif de la manivelle.

Selon une autre caractéristique de l'invention, les éléments de maintien sont constitués par des éléments annulaires.

Selon encore une autre caractéristique de l'invention, au moins un des éléments de maintien sert également de palier de guidage à l'arbre rotatif de la manivelle.

Selon une autre caractéristique de l'invention, la pièce support et la pièce de fermeture constituent respectivement la partie inférieure et la partie supérieure d'un couvercle en deux parties destiné à reposer sur un récipient de réception des aliments râpés.

Selon une autre caractéristique de l'invention, la partie supérieure du couvercle est montée pivotante autour d'une charnière disposée à l'opposé de l'emplacement de la manivelle.

Selon une autre caractéristique de l'invention, le couvercle est muni d'un dispositif de verrouillage permettant de retenir la partie supérieure du couvercle en position de travail sur la partie inférieure du couvercle lorsque la manivelle n'est pas engagée au travers des éléments de maintien.

Selon une autre caractéristique de l'invention, la partie supérieure du couvercle comporte une cheminée d'introduction des aliments débouchant latéralement au tambour et recevant un poussoir.

Selon une autre caractéristique de l'invention, le tambour comporte une paroi latérale perforée, une extrémité ouverte et une extrémité fermée par un flasque, l'extrémité de l'arbre rotatif de la manivelle comportant un entraîneur adapté pour s'accoupler de manière amovible avec ledit flasque.

Selon une autre caractéristique de l'invention, l'axe du tambour est légèrement incliné par rapport au plan de fermeture du couvercle.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil à râper les aliments selon l'art antérieur ;
- la figure 2 est une vue en perspective d'un appareil à râper les aliments selon un mode particulier de réalisation de l'invention ;
- la figure 3 est une autre vue en perspective de l'appareil de la figure 2 lorsque la manivelle est désaccouplée de l'appareil ;
- la figure 4 est une vue semblable à la figure 3 représentant l'appareil lorsque la parti supérieure du couvercle est en position basculée.
- La figure 5 est une vue en perspective éclatée de l'appareil des figures 2 à 4.

Seuls les éléments nécessaires à la compréhension de l'invention ont été représentés. Pour faciliter la lecture des dessins les mêmes éléments portent les mêmes références d'une figure à l'autre.

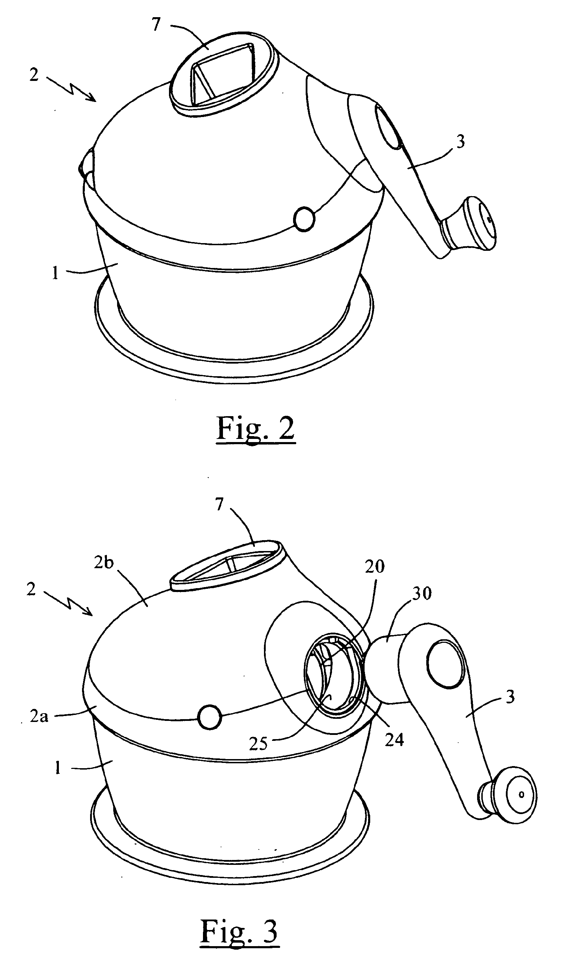

La figure 2 représente un appareil manuel pour râper les aliments comportant un récipient 1 sur lequel est posé un couvercle 2, ce dernier renfermant un dispositif pour râper les aliments actionné par une manivelle amovible 3 comportant un arbre rotatif 30 s'engageant au travers d'une ouverture latérale 20 du couvercle 2, ainsi qu'on peut mieux le voir sur la figure 3.

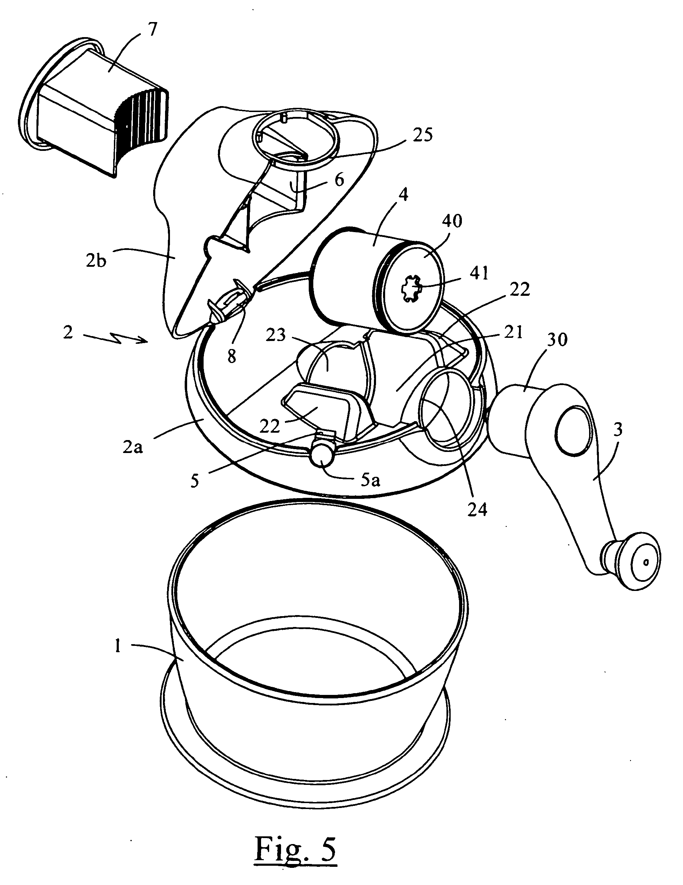

Conformément aux figures 4 et 5, le couvercle 2 comporte une partie inférieure 2a sur laquelle est montée pivotante une partie supérieure 2b, la partie inférieure 2a du couvercle supportant un tambour cylindrique 4 rotatif prenant place dans un berceau 21 semi-cylindrique, mieux visible sur la figure 5.

La partie supérieure 2b du couvercle peut occuper une position de travail, illustrée aux figures 2 et 3, dans laquelle elle vient recouvrir et emprisonner le tambour 4 dans le berceau 21 et une position basculée, illustrée à la figure 4, dans laquelle elle est soulevée par rapport à la partie inférieure 2a de sorte que le tambour 4 peut être dégagé du berceau 21, notamment pour le lavage de l'appareil.

La partie supérieure 2b du couvercle 2 est montée pivotante sur la partie inférieure 2a au moyen d'une charnière 8 préférentiellement disposée à l'opposé de l'ouverture 20 pour l'engagement de la manivelle 3 de manière à offrir un excellent dégagement du tambour 4 lorsque le couvercle 2 est dans sa position basculée.

Avantageusement, la partie inférieure 2a du couvercle 2 comporte des rampes de guidage 22 s'élevant latéralement de part et d'autre du berceau semi-cylindrique 21 de sorte que la mise en place du tambour 4 dans son berceau 21 est facilité.

La partie supérieure 2b du couvercle comporte une cheminée 6 d'introduction des aliments, munie d'un poussoir 7, débouchant latéralement au tambour 4 lorsque la partie supérieure 2b est en position de travail, l'extrémité inférieure de la cheminée 6 s'engageant entre les rampes de guidage 22 et présentant un bord épousant la forme du tambour 4 en venant à proximité immédiate de ce dernier.

Le tambour 4 présente classiquement une paroi latérale métallique munie de perforations, non représentées sur les figures, et comprend une extrémité ouverte venant en regard d'un large orifice 23 de sortie des aliments râpés pratiqué à l'extrémité du berceau semi-cylindrique 21, l'autre extrémité du tambour 4 étant fermée par un flasque 40.

Le flasque 40 du tambour comporte des moyens d'accouplement avec l'extrémité de l'arbre rotatif 30 de la manivelle amovible 3, ces moyens d'accouplement étant avantageusement constitués par un trou central 41 muni d'échancrures adaptées pour recevoir un entraîneur 31 disposé en bout de l'arbre rotatif 30 de la manivelle, l'entraîneur 31 étant constitué par un corps de forme générale cylindrique dont la surface latérale porte des nervures hélicoïdales.

De façon préférentielle, le berceau 21 de réception du tambour 4 est incliné par rapport au plan de fermeture du couvercle 2 de sorte que l'extrémité du tambour munie du flasque 40 s'accouplant à la manivelle 3 est surélevé. Un tel agencement permet d'obtenir un meilleur dégagement de la manivelle 3 par rapport au plan d'appui du récipient, facilitant ainsi le maniement de cette dernière.

La partie inférieure 2a du couvercle comporte avantageusement un verrou constitué par un loquet 5 ramené élastiquement vers la périphérie extérieure du couvercle 2 et venant s'engager dans une rainure adaptée formée sur la paroi interne de la partie supérieure 2b du couvercle 2, le loquet 5 étant solidaire d'un bouton de déverrouillage 5a accessible sur la paroi externe du couvercle 2. Pour des raisons d'encombrement de la zone située à proximité de la manivelle 3, ce bouton 5a est disposé sur la périphérie du couvercle 2, à sensiblement 45 °de la manivelle 3.

Plus particulièrement selon l'invention, les parties inférieure 2a et supérieure 2b du couvercle 2 comportent chacune un anneau de maintien 24, 25 dans lequel vient s'insérer l'arbre rotatif 30 de la manivelle lorsque la partie supérieure 2b est en position de travail et que la manivelle 3 est engagée dans l'ouverture latérale 20 du couvercle pour venir s'accoupler au tambour rotatif 4.

L'anneau de maintien 24 porté par la partie inférieure 2a du couvercle présente une forme cylindrique ajustée au diamètre de l'arbre rotatif 30 et présente une portée suffisante pour servir également de palier de guidage à l'arbre rotatif 30 de la manivelle. L'anneau de maintien 25 de la partie supérieure 2b présente quant à lui une largeur moindre et sert essentiellement à rendre la partie supérieure 2b du couvercle radialement solidaire de l'arbre rotatif 30 de la manivelle afin que la partie supérieure 2b du couvercle ne puisse pas se soulever au niveau de la manivelle 3, c'est-à-dire à l'endroit où les efforts de poussée sont les plus importants lors du fonctionnement de l'appareil.

L'appareil ainsi réalisé présente l'avantage de posséder une très grande tenue de la partie supérieure 2b du couvercle sur sa partie inférieure 2a, la mise en place ou le retrait de la manivelle 3 sur l'appareil rendant la partie supérieure 2b solidaire de la partie inférieure 2a du couvercle, et ceci sans qu'il soit nécessaire que l'utilisateur effectue une manipulation supplémentaire de verrouillage.

Sur cet appareil, le verrou 5 associé au bouton de déverrouillage 5a sert uniquement à maintenir la partie supérieure 2b contre la partie inférieure 2a du couvercle lors du transport ou du rangement de l'appareil, l'essentiel des efforts de retenue de la partie supérieure 2b du couvercle sur la partie inférieur 2a lors du fonctionnement de l'appareil étant assuré par les anneaux de maintien 24, 25 et par la charnière 8. Ainsi, dans une variante simplifiée de l'appareil non représentée, on pourra supprimer le verrou 5 associé au bouton de verrouillage 5a de sorte que le verrouillage de la partie supérieure 2b du couvercle sur la partie inférieure 2a sera assurée par les seuls anneaux de maintien 24, 25.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans l'exemple représenté précédemment les anneaux de maintien sont constitués par des anneaux fermés s'étendant sur l'ensemble de la périphérie de l'arbre rotatif de la manivelle. Cependant, dans une variante de réalisation de l'invention non représentée, les anneaux de maintien pourront être ouverts, en ne s'étendant que sur une partie de la périphérie de l'arbre de la manivelle.

Dans une autre variante de réalisation non représentée, le verrou de l'appareil associé au bouton de déverrouillage pourra être remplacé par un système d'encliquetage élastique de la partie supérieure sur la partie inférieure du couvercle. A cet effet, les deux anneaux de maintien pourront comprendre des rainures ou bossages sur leurs surfaces venant en vis-à-vis de sorte que les anneaux de maintien s'encliquettent élastiquement l'un sur l'autre lorsque la partie supérieure du couvercle est en position de travail. La partie supérieure du couvercle peut ensuite être ouverte en soulevant, en forçant légèrement, la partie supérieure du couvercle lorsque la poignée n'est pas accouplée au tambour.

## Revendications

1. Appareil pour râper les aliments comportant un tambour rotatif (4) entraîné en rotation par une manivelle (3) comprenant un arbre rotatif (30) dont l'extrémité peut s'accoupler de manière amovible avec ledit tambour rotatif (4), le tambour étant disposé dans un berceau (21) semi-cylindrique ménagé sur une pièce support (2a), une pièce de fermeture (2b) montée pivotante sur la pièce support (2a) pouvant occuper soit une position de travail dans laquelle elle recouvre et emprisonne le tambour (4) dans le berceau (21), soit une position basculée dans laquelle le tambour (4) est dégagé, **caractérisé en ce que** la pièce support (2a) et la pièce de fermeture (2b) comportent chacune au moins un élément de maintien (24, 25) au travers duquel s'engage axialement l'arbre rotatif (30) de la manivelle lorsque la manivelle (3) est accouplée audit tambour (4).

2. Appareil selon la revendication 1, **caractérisé en ce que**, lorsque la manivelle (3) est accouplée au tambour (4), l'élément de maintien (24) porté par la pièce support (2a) s'étend, au moins partiellement, autour de la moitié supérieure de l'arbre rotatif (30) de la manivelle tandis que l'élément de maintien (25) porté par la pièce de fermeture (2b) s'étend, au moins partiellement, autour de la moitié inférieure de l'arbre rotatif (30) de la manivelle.

3. Appareil selon l'une quelconque des revendications 1 à 2, **caractérisé en ce que** les éléments de maintien (24, 25) sont constitués par des éléments annulaires.

4. Appareil selon la revendication 3, **caractérisé en ce qu**'au moins un des éléments de maintien (24, 25) sert également de palier de guidage à l'arbre rotatif (30) de la manivelle.

5. Appareil selon l'une quelconque des revendications 1 à 4, **caractérisé en ce que** ladite pièce support (2a) et ladite pièce de fermeture (2b) constituent respectivement la partie inférieure et la partie supérieure d'un couvercle (2) en deux parties destiné à reposer sur un récipient de réception (1) des aliments râpés.

6. Appareil selon la revendication 5, **caractérisé en ce que** la partie supérieure (2a) du couvercle est montée pivotante autour d'une charnière (8) disposée à l'opposé de l'emplacement de la manivelle (3).

7. Appareil selon l'une quelconque des revendications 5 à 6, **caractérisé en ce que** le couvercle (2) est muni d'un dispositif de verrouillage (5) permettant de retenir la partie supérieure (2b) du couvercle en position de travail sur la partie inférieure (2a) du couvercle lorsque la manivelle (3) n'est pas engagée au travers des éléments de maintien (24, 25).

8. Appareil selon l'une quelconque des revendications 5 à 7, **caractérisé en ce que** la partie supérieure (2b) du couvercle comporte une cheminée (6) d'introduction des aliments débouchant latéralement au tambour (4) et recevant un poussoir (7).

9. Appareil selon l'une quelconque des revendications 1 à 8, **caractérisé en ce que** le tambour (4) comporte une paroi latérale perforée, une extrémité ouverte et une extrémité fermée par un flasque (40), l'extrémité de l'arbre rotatif (30) de la manivelle comportant un entraîneur (31) adapté pour s'accoupler de manière amovible avec ledit flasque (40).

10. Appareil selon l'une quelconque des revendications 1 à 8, **caractérisé en ce que** l'axe dudit tambour (4) est légèrement incliné par rapport au plan de fermeture du couvercle (2).

## Claims

1. A food grater appliance comprising a rotary drum (4) driven in rotation by a handle (3) comprising a rotary shaft (30) having an end suitable for releasably coupling with said rotary drum (4), the drum being placed in a semi-cylindrical cradle (21) formed on a support part (2a), a closure part (2b) pivotally mounted to the support part (2a) being capable of occupying either a working position in which it covers the drum (4) and holds it captive in the cradle (21), or a tilted position in which the drum is uncovered, the appliance being **characterized in that** each of the support part (2a) and the closure part (2b) includes at least one holding element (24, 25) through which the rotary shaft (30) of the handle is engaged axially when the handle (3) is coupled to said drum (4).

2. An appliance according to claim 1, **characterized in that** when the handle (3) is coupled to the drum (4), the holding element (24) carried by the support part (2a) extends at least in part around the top half of the rotary shaft (30) of the handle, while the holding element (25) carried by the closure part (2b) extends at least in part around the bottom half of the rotary shaft (30) of the handle.

3. An appliance according to claim 1 or claim 2, **characterized in that** the holding elements (24, 25) are constituted by annular elements.

4. An appliance according to claim 3, **characterized in that** at least one of the holding elements (24, 25) also serves as a bearing for guiding the rotary shaft (30) of the handle.

5. An appliance according to any one of claims 1 to 4, **characterized in that** said support part (2a) and said closure part (2b) respectively constitute the bottom portion and the top portion of a two-part lid (2) for resting on a receptacle (1) for receiving grated food.

6. An appliance according to claim 5, **characterized in that** the top portion (2a) of the lid is mounted to pivot about a hinge (8) located opposite from the location of the handle (3).

7. An appliance according to claim 5 or claim 6, **characterized in that** the lid (2) is provided with a locking device (5) enabling the top portion (2b) of the lid to be retained in a working position on the bottom portion (2a) of the lid when the handle (3) is not engaged through the holding elements (24, 25).

8. An appliance according to any one of claims 5 to 7, **characterized in that** the top portion (2b) of the lid includes a food-insertion tube (6) opening out beside the drum (4) and receiving a pusher (7).

9. An appliance according to any one of claims 1 to 8, **characterized in that** the drum (4) has a perforated side wall, an open end, and an end closed by an end plate (40), the end of the rotary shaft (30) of the handle including a driver (31) adapted to couple releasably with said end plate (40).

10. An appliance according to any one of claims 1 to 8, **characterized in that** the axis of said drum (4) slopes a little relative to the closure plane of the lid (2).

## Patentansprüche

1. Gerät zum Reiben der Nahrungsmittel, mit einer Drehtrommel (4), die von einer Kurbel (3) in Drehung versetzt wird, welche eine Drehwelle (30) aufweist, deren Ende abnehmbar an die Drehtrommel (4) gekoppelt sein kann, wobei die Trommel in einem halbzylindrischen Gestell (21) angeordnet ist, das an einem Trägerteil (2a) ausgebildet ist, wobei ein schwenkbar am Trägerteil (2a) angebrachtes Verschlussteil (2b) entweder eine Arbeitsstellung, in der es die Trommel (4) bedeckt und diese im Gestell (21) einschließt, oder eine gekippte Stellung einnehmen kann, in der die Trommel (4) freiliegt, **dadurch gekennzeichnet, dass** das Trägerteil (2a) und das Verschlussteil (2b) jeweils mindestens ein Halteelement (24, 25) aufweisen, durch das die Drehwelle (30) der Kurbel axial eingreift, wenn die Kurbel (3) an die Trommel (4) gekoppelt ist.

2. Gerät nach Anspruch 1, **dadurch gekennzeichnet, dass** sich das von dem Trägerteil (2a) getragene Halteelement (24) zumindest teilweise um die obere Hälfte der Drehwelle (30) der Kurbel erstreckt, während sich das von dem Verschlussteil (2b) getragene Halteelement (25) zumindest teilweise um die untere Hälfte der Drehwelle (30) der Kurbel erstreckt, wenn die Kurbel (3) an die Trommel (4) gekoppelt ist.

3. Gerät nach Anspruch 1 oder 2, **dadurch gekennzeichnet, dass** die Halteelemente (24, 25) durch ringförmige Elemente gebildet sind.

4. Gerät nach Anspruch 3, **dadurch gekennzeichnet, dass** mindestens eines der Halteelemente (24, 25) auch als Lager zur Führung der Drehwelle (30) der Kurbel dient.

5. Gerät nach einem der Ansprüche 1 bis 4, **dadurch gekennzeichnet, dass** das Trägerteil (2a) und das Verschlussteil (2b) den unteren Bereich bzw. den oberen Bereich eines zweiteiligen Deckels (2) bilden, der auf einem Behälter (1) zur Aufnahme der geriebenen Nahrungsmittel aufliegen soll.

6. Gerät nach Anspruch 5, **dadurch gekennzeichnet, dass** der obere Bereich (2a) des Deckels schwenkbar um ein Gelenk (8) angebracht ist, das gegenüber der Position der Kurbel (3) angeordnet ist.

7. Gerät nach Anspruch 5 oder 6, **dadurch gekennzeichnet, dass** der Deckel (2) mit einer Verriegelungsvorrichtung (5) ausgestattet ist, die das Halten des oberen Bereichs (2b) des Deckels in einer Arbeitsstellung auf dem unteren Bereich (2a) des Deckels ermöglicht, wenn die Kurbel (3) nicht durch die Halteelemente (24, 25) eingreift.

8. Gerät nach einem der Ansprüche 5 bis 7, **dadurch gekennzeichnet, dass** der obere Bereich (2b) des Deckels einen Schacht (6) zur Einführung der Nahrungsmittel aufweist, der seitlich der Trommel (4) mündet und eine Drückeinrichtung (7) aufnimmt.

9. Gerät nach einem der Ansprüche 1 bis 8, **dadurch gekennzeichnet, dass** die Trommel (4) eine perforierte Seitenwand, ein offenes Ende und ein von einem Flansch (40) geschlossenes Ende aufweist, wobei das Ende der Drehwelle (30) der Kurbel einen Antrieb (31) aufweist, der dazu geeignet ist, abnehmbar an den Flansch (40) gekoppelt zu sein.

10. Gerät nach einem der Ansprüche 1 bis 8, **dadurch gekennzeichnet dass** die Achse der Trommel (4) bezüglich der Schließebene des Deckels (2) geringfügig geneigt ist.
